# FASCICULE DE BREVET EUROPEEN

(11) **EP 1 153 541 B1**
(45) Date de publication et mention de la délivrance du brevet: **17.09.2003**
(21) Numéro de dépôt: 01440127.7
(22) Date de dépôt: 10.05.2001
(51) Int. Cl.: A01G 17/14, E04H 12/22, E04H 17/22

(54) **Palissade pour clôture ou plantation**
Zaun für Umzäunung oder Plantage
Fence for fencing or plantation

(30) Priorité: 10.05.2000 FR 0005925
(43) Date de publication de la demande: 14.11.2001
(73) Titulaire: Bruggert, Paul Joseph, 68500 Guebwiller (FR)
(72) Inventeur: Bruggert, Paul Joseph, 68500 Guebwiller (FR)
(74) Mandataire: Nithardt, Roland

(56) Documents cités:
- AU-A- 8 708 282
- FR-A- 2 568 615
- GB-A- 2 140 842
- US-A- 4 058 882
- US-A- 5 058 337
- US-A- 5 515 645
- PATENT ABSTRACTS OF JAPAN vol. 1997, no. 03, 31 mars 1997 (1997-03-31) & JP 08 312205 A (YOSHIDA SUSUMU), 26 novembre 1996 (1996-11-26)

## Description

La présente invention concerne une palissade pour clôture ou plantation comportant au moins des piquets destinés à être enfoncés dans le sol sur une hauteur d'enfoncement définie et agencés pour supporter un grillage ou des fils de palissage sur la hauteur restante. Elle concerne aussi une palissade complétée de tuteurs pour jeunes plants et de jambes de force pour maintenir les piquets de tête à chaque extrémité des rangs de la palissade.

Ce type de palissade comporte habituellement des piquets métalliques en tôle galvanisée, munis de crochets ou d'encoches pour positionner et fixer le grillage ou les fils de palissage.

L'invention s'applique plus particulièrement mais non exclusivement à la viticulture. La culture de la vigne nécessite le palissage de la vigne. A cet effet, les piquets sont, selon les régions et les techniques, placés tous les cinq pieds de vigne et restent en terre pendant toute la durée de vie des vignes soit de 25 à 40 ans. Ils portent en partie basse les fils de portage pour porter les grappes de raisins et en partie haute les fils de palissage pour aligner et maintenir les pousses soumises au vent. Pour des questions de poids et de coût, l'épaisseur de tôle utilisée pour former les piquets métalliques est limitée à environ 1,5 mm. Ces piquets sont donc sujet à usure prématurée selon la qualité du sol et certains doivent être remplacés, ce qui nécessite un travail pénible puisqu'il faut retirer les fils de portage et de palissage. De plus, les encoches recevant les différents fils sont brutes et favorisent le frottement des fils avec risque de rupture prématurée des fils. Ces piquets étant soumis au vent, doivent être suffisamment enterrés dans le sol, à défaut ils peuvent pencher voire se coucher et déformer ainsi toute la palissade. Leur enfoncement dans le sol, généralement sur une hauteur de 60 à 70 cm, est par conséquent fastidieux. Ces piquets ont par ailleurs une section ouverte en U ou complexe pour leur conférer une bonne stabilité dans l'espace. Néanmoins, cette forme tridimensionnelle limite le stockage et augmente le coût du transport puisque les piquets n'ont pas des formes complémentaires qui leur permettent de se superposer. D'autre part, pour un même produit, il existe différentes références de piquets selon qu'il s'agit d'un piquet de tête, d'un piquet d'ancrage, d'un piquet intermédiaire pour un fil ou pour plusieurs fils, nécessitant donc une gestion de production et de stock complexe.

Certains piquets connus comportent dans leur zone d'enfoncement une ou plusieurs ailes de renfort, par exemple orientées perpendiculairement, permettant de renforcer leur tenue au vent. Néanmoins, dans les piquets décrits dans les publications US 4,058,882- US 5,058,337 - US 5,515,645 -FR 2 568 615 et GB 2 140 842, les ailes de renfort sont fixées solidairement au piquet notamment par soudure. Par conséquent, la pointe du piquet présente un encombrement volumineux qui ne permet de le stocker et de le transporter aisément et à moindre coût.

Le palissage de la vigne comporte également la fixation des jeunes plants de vigne sur des tuteurs. Ces tuteurs sont habituellement en bois, ont une taille nettement inférieure à celle des piquets et sont placés à chaque nouveau pied de vigne. Ils restent en terre environ trois à quatre ans et ne sont généralement pas réutilisables puisqu'ils sont soit détériorés, soit pourris. De plus, ces tuteurs étant réalisés avec de simples morceaux de bois, ils ne permettent pas de fixer facilement et rapidement les jeunes plants.

Une palissade de ce type comporte également des piquets de tête à chaque extrémité permettant la mise en place d'une jambe de force pour rigidifier l'ensemble. Habituellement, la jambe de force est un profilé métallique en T dont l'extrémité haute est fixée au piquet de tête et l'extrémité basse est solidaire d'un bloc en béton destiné à être enfoui dans le sol. Ce système est fastidieux et lourd à mettre en place. De plus, la longueur de la jambe de force dépendant de la pente du terrain, elle doit être fabriquée à façon, ce qui augmente son coût de fabrication et complique encore le montage.

Le but de la présente invention est de pallier ces inconvénients en proposant une palissade formée de piquets de forme simple, économiques, ayant une très longue durée de vie, pouvant être stockés et transportés en grand nombre, permettant la mise en place rapide et fiable des différents fils de portage et de palissage, et présentant une très bonne stabilité dans l'espace et une excellente résistance au vent tout en demandant une profondeur d'enfoncement inférieure à la pratique.

Le but de la présente invention est également de proposer une palissade complétée par des tuteurs présentant les mêmes caractéristiques et avantages que les piquets ainsi que des jambes de force faciles à ajuster et à mettre en place.

Ces buts sont atteints par une palissade telle que définie en préambule et caractérisée en ce que les piquets comportent chacun, dans la hauteur d'enfoncement, une ouverture longitudinale agencée pour recevoir une traverse, cette traverse comportant une fente agencée pour s'emboîter sur le piquet au moment de son enfoncement dans le sol, ladite traverse étant orientée perpendiculairement à ce piquet pour former avec lui une section en croix.

Dans une forme de réalisation préférée de l'invention, les tuteurs comportent également chacun, dans la hauteur d'enfoncement, une ouverture longitudinale agencée pour recevoir ladite traverse, cette traverse étant orientée perpendiculairement à ce tuteur pour former avec lui une section en croix.

Dans ce cas, le piquet, le tuteur et la traverse peuvent comporter à leur extrémité, destinée à être enfoncée dans le sol, une forme en pointe.

Le piquet ou le tuteur peut également comporter une ouverture longitudinale complémentaire agencée pour recevoir un raidisseur, ce raidisseur comportant à ses extrémités deux fentes orientées perpendiculairement et agencées pour s'emboîter respectivement sur la traverse et sur le piquet ou le tuteur.

Le piquet peut comporter au moins une encoche pourvue d'un guide-fil agencé pour guider sans frottement un fil de palissage, ce guide-fil étant réalisé en matière synthétique et présentant une forme en U emboîtable dans ladite encoche par déformation.

Le tuteur peut également comporter au moins un orifice pourvu d'un clip de fixation d'un jeune plant, ce clip de fixation comportant au moins un téton en forme de harpon fixé dans ledit orifice, une forme en creux pour recevoir la tige du jeune plant et un collier amovible pour maintenir la tige contre ledit clip. Ce clip peut en plus comporter des pattes latérales pour la fixation d'un filet de protection du jeune plant.

Le tuteur peut également comporter au moins un orifice pourvu d'un support guide-fil, ce support guide-fil comportant au moins un téton en forme de harpon fixé dans ledit orifice et un oeillet pour recevoir un fil de portage.

Dans la forme de réalisation préférée, les jambes de force de la palissade comportent un tube mâle emboîté dans un tube femelle par coulissement et assemblés à la longueur souhaitée par une goupille transversale logée dans des trous correspondants, un des tubes étant solidaire du piquet de tête et l'autre tube étant solidaire d'un piquet de retenue prévu dans le sol à distance du piquet de tête.

La présente invention et ses avantages seront mieux compris dans la description suivante d'une forme de réalisation donnée à titre d'exemple non limitatif et en référence aux dessins annexés, dans lesquels :
- la figure 1 est une vue de face d'un piquet de la palissade selon l'invention,
- la figure 2 est une vue de côté du piquet de la figure 1,
- la figure 3 est une vue de dessus du piquet de la figure 1,
- la figure 4 est une vue de face d'un tuteur de la palissage selon l'invention,
- la figure 5 est une section du tuteur de la figure 4 au niveau d'un support guide-fil,
- la figure 6 est une section du tuteur de la figure 4 au niveau d'un clip de fixation d'un plant,
- la figure 7 est une vue de la traverse équipant le piquet et le tuteur respectivement des figures 1 et 4,
- la figure 8 est une vue de détail d'un guide fil,
- la figure 9 est une vue de détail d'un clip de fixation d'un plan,
- la figure 10 est une vue d'une jambe de force pour un piquet de tête de la palissade selon l'invention, et
- la figure 11 est une vue éclatée d'une variante de réalisation du piquet ou du tuteur respectivement des figures 1 et 4.

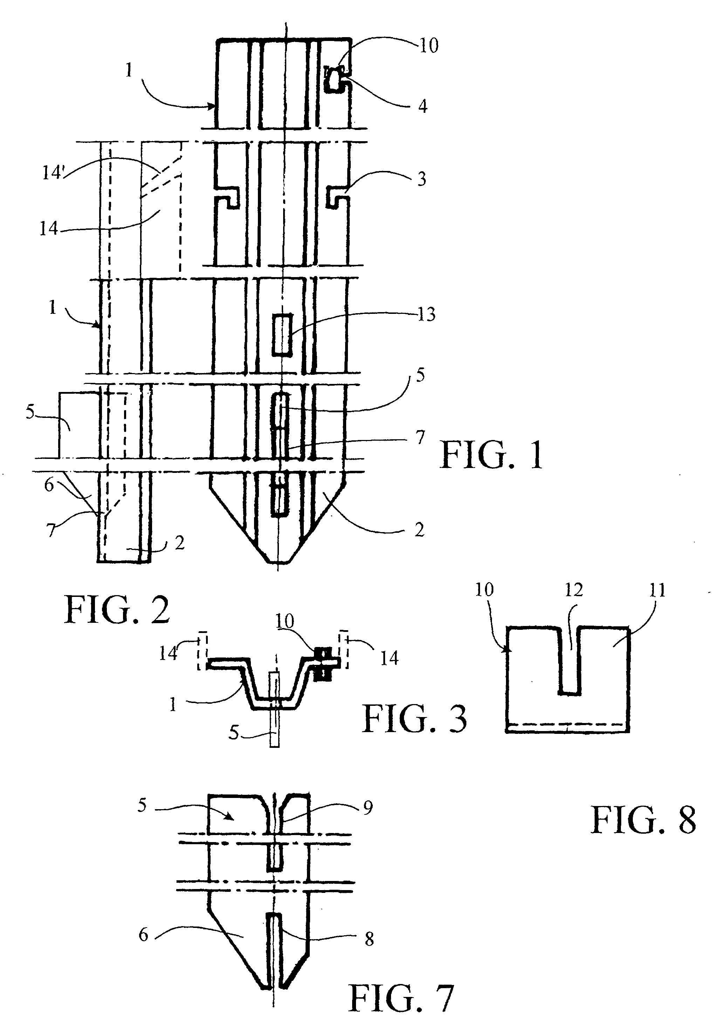

En référence aux figures 1 à 3 et 7, la palissade (non représentée) selon l'invention comporte des piquets 1 métalliques, ayant une section ouverte en oméga inversé, symétrique par rapport à un plan médian, et facilitant l'empilage des piquets les uns sur les autres sans perte de volume. Le piquet 1 comporte une pointe 2 centrée sur son plan médian, facilitant son enfoncement dans le sol. Il est formé d'une tôle d'acier poinçonnée ou emboutie, pliée et traitée par exemple au moyen d'un zingage à chaud pour garantir une très longue durée de vie. Néanmoins, d'autres traitements de surface peuvent aussi être envisagés. La tôle utilisée a une épaisseur par exemple égale à 5 mm pour renforcer également sa durée de vie et sa résistance mécanique à long terme.

Chaque piquet 1 comporte des premières encoches 3 pour positionner les fils de portage et des secondes encoches 4 pour les fils de palissage. Ces encoches 3 et 4 sont réparties sur toute la hauteur du piquet 1, par exemple égale à 1,60 m. L'encoche 3 est en forme de L couché bloquant le fil de portage au fond de l'encoche et l'encoche 4 a une forme d'oeillet pour recevoir un guide-fil 10 pour guider sans frottement le fil de palissage.

La particularité de ce piquet 1 est qu'il comporte une traverse 5 dans sa zone d'enfoncement pour augmenter sa stabilité verticale et sa résistance au vent tout en réduisant sa profondeur d'enfoncement à environ 50 cm, par exemple.

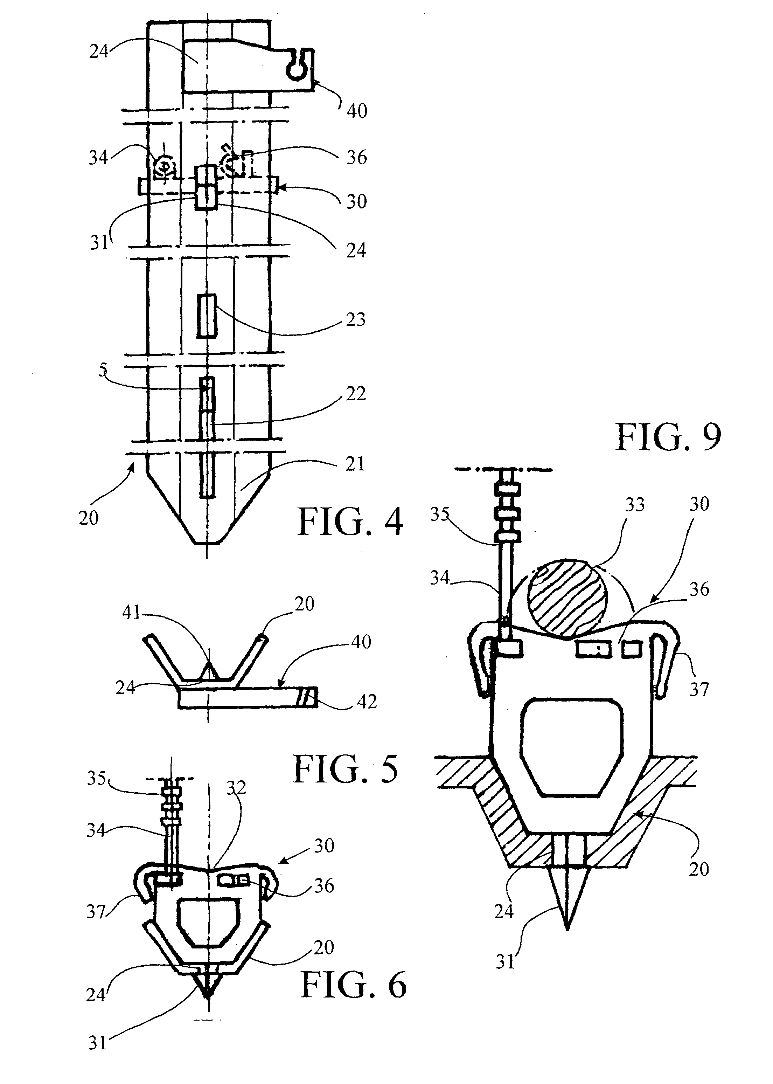

Cette traverse 5 est illustrée en détail par la figure 7. Elle est formée d'une tôle plate de mêmes nature, épaisseur et traitement que celle utilisée pour le piquet 1 et comporte une pointe 6. La traverse 5 est agencée pour se loger dans une ouverture longitudinale, telle qu'une lumière 7 prévue à la base du piquet 1 disposée dans son plan médian. Elle a donc une hauteur correspondante à celle de la lumière 7 et se positionne dans le plan médian du piquet 1 pour former avec lui une section en croix. Elle comporte deux fentes 8 et 9 alignées avec le plan médian du piquet 1 et d'une largeur équivalente à l'épaisseur de la tôle pour pouvoir s'emboîter sur le piquet 1. La traverse 5 a un côté plus court que l'autre pour former avec le piquet 1 un ensemble équilibré comme représenté par la figure 2.

Cette traverse 5 est livrée séparément du piquet 1 pour des questions d'encombrement et de faciliter de conditionnement et de transport. Elle est introduite dans la lumière 7 du piquet 1 au moment de sa mise en place dans le sol. Au fur et à mesure que le piquet 1 est enfoncé dans le sol, la traverse 5 est repoussée jusqu'à ce qu'elle soit en butée avec le haut de la lumière 7. La traverse 5 est alors enfoncée dans le sol simultanément avec le piquet 1 et forme avec lui un ancrage en forme de croix qui augmente considérablement sa résistance verticale.

Le piquet 1 comporte également, dans son plan médian, au-dessus de la lumière 7 et en dehors de la zone d'enfoncement dans le sol, une ouverture 13 qui permet l'introduction d'un outil pour faciliter à la fois l'enfoncement et l'extraction du piquet.

Le piquet 1 peut également être complété par des bords repliés 14 comme représentés en pointillés sur les figures 2 et 3. Dans ce cas, les encoches 3 et 4 peuvent être prolongées d'une fente d'introduction 14' inclinée et située au-dessus de l'encoche 3, 4 permettant de piéger une ficelle de palissade dans ladite encoche. Les ficelles de palissade sont par exemple utilisées pour maintenir des jeunes serments lors de leur pousse. Cette variante de réalisation du piquet 1 est avantageuse notamment par rapport à l'utilisation d'une machine à vendanger ou toute autre machine qui peut frôler ou cogner les piquets 1. En effet, chaque ficelle de palissade disposée dans son encoche 3 ou 4 est protégée par le bord replié 14 correspondant formant un plan d'appui n'offrant aucune arête vive risquant de cisailler ladite ficelle de palissade utilisée pour la végétation en croissance.

Dans le cas d'un piquet 1 sans bord replié 14, il est également possible de masquer les arêtes vives du piquet 1 par un tube de protection fendu et emboîté le long des bords du piquet 1, ce tube étant par exemple réalisé en matières synthétiques.

Le guide-fil 10 prévu dans l'encoche 4 est représenté en détail et en vue de côté par la figure 8. Il est constitué d'une pièce en matière synthétique en forme de U et s'emboîte par déformation de ses ailes 11 dans l'encoche 4. Il comporte dans ses ailes 11 deux fentes 12 en regard dont la largeur correspond à l'épaisseur de la tôle du piquet 1 pour pouvoir se bloquer sur ce piquet 1 après sa mise en place. La matière qui le constitue est de préférence une matière à très faible coefficient de frottement comme un Téflon® ou toute autre matière équivalente, pour préserver les fils de palissage d'une usure prématurée.

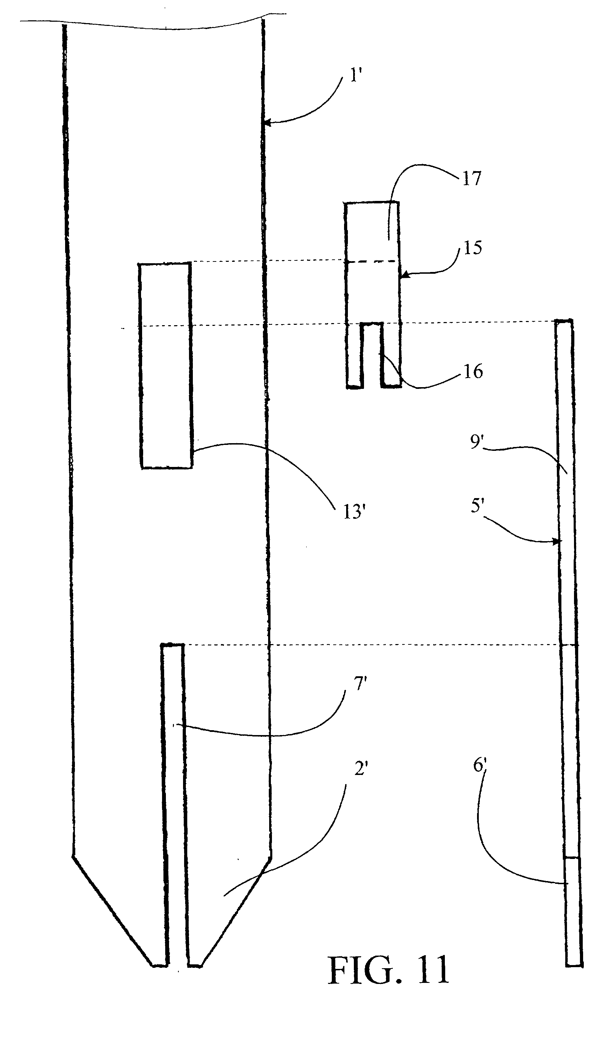

La figure 11 illustre une variante de réalisation d'un piquet 1' dans lequel la lumière 7 est remplacée par une fente 7' débouchant à l'extrémité de la pointe 2'. De même, la traverse 5' ne comporte qu'une fente 9' à son extrémité supérieure. Par ailleurs, le piquet 1' comporte une lumière complémentaire 13' agencée pour recevoir un raidisseur 15 formé d'une pièce de section carrée, par exemple métallique, sa largeur correspondant à la largeur de la lumière complémentaire 13'. Ce raidisseur 15 comporte à ses deux extrémités opposées deux fentes 16, 17 orientées perpendiculairement, ces fentes présentant une largeur correspondant à l'épaisseur de la tôle du piquet 1' et du raidisseur 15. L'assemblage de ces trois pièces s'effectue en introduisant le raidisseur 15 dans la lumière complémentaire 13', puis en introduisant la traverse 5' dans la fente 7' du piquet 1'. Lors de l'enfoncement du piquet 1' dans le sol, la traverse 5' remonte et s'emboîte sur le piquet 1' jusqu'à buter contre le fond de la fente 7'. Simultanément, la partie haute de la traverse 5' s'emboîte dans la fente 17 du raidisseur 15 qui lui-même s'emboîte sur le piquet 1' par sa fente 18. Ce raidisseur 15 a par conséquent l'avantage de créer un point fixe en partie haute de la traverse 5' renforçant la tenue de l'ensemble en flexion.

En référence aux figures 4 à 6, la palissade selon l'invention comporte également des tuteurs 20 pour jeunes plants, métalliques, ayant une section ouverte en V à fond plat, symétrique par rapport à un plan médian, et facilitant l'empilage des tuteurs les uns sur les autres sans perte de volume. Le tuteur 20 comporte une pointe 21 centrée sur son plan médian, facilitant son enfoncement dans le sol. Il est formé, tout comme le piquet 1, d'une tôle d'acier poinçonnée ou emboutie, pliée et traitée par exemple au moyen d'un zingage à chaud pour garantir une très longue durée de vie. Néanmoins, d'autres traitements de surface peuvent aussi être envisagés. La tôle utilisée a une épaisseur par exemple égale à 5 mm pour renforcer également sa durée de vie et sa résistance mécanique à long terme.

Ce tuteur 20 est conçu avec la même particularité que le piquet 1, à savoir que sa rigidité verticale est renforcée par la présence d'une traverse 5, 5', de formes et de fonctions équivalentes, logée dans une lumière 22 longitudinale ou combinée avec un raidisseur et logée dans une fente comme dans la variante illustrée par la figure 11

Le tuteur 20 comporte une ouverture 23 équivalente à l'ouverture 13 du piquet 1 pour faciliter l'enfoncement et l'extraction du tuteur 20. Il comporte également plusieurs orifices 24 centrés sur son plan médian et agencés pour recevoir soit un ou plusieurs clips de fixation 30, soit un ou plusieurs supports guide-fil 40.

Le clip de fixation 30 est illustré par les figures 6 et 9 et permet une fixation simple et rapide des jeunes plants en remplacement des liens simples utilisés habituellement. Il est réalisé dans une matière synthétique et comporte une forme trapézoïdale pour se loger à l'intérieur de la forme en V du tuteur 20. Il est fixé au tuteur 20 par un téton 31 en forme de harpon qui s'emboîte et se verrouille dans un orifice 24 correspondant. A l'opposé du téton 31, le clip de fixation 30 comporte une forme en creux 32 apte à recevoir la tige 33 d'un jeune plant ainsi qu'un collier 34 amovible apte à maintenir cette tige 33 en appui contre ce clip. Ce collier 34 est solidaire à l'une de ses extrémités du clip 30 et comporte à l'autre extrémité des crans 35 destinés à se loger dans un crochet 36 solidaire du clip 30. Ainsi, ce clip 30 peut convenir pour différents diamètres de tige 33. Le clip 30 comporte également des pattes 37 latérales repliées sur ses côtés et permettant de fixer un filet de protection (non représenté) du jeune plant.

Le support guide-fil 40 représenté dans les figures 4 et 5 permet une fixation simple et rapide des fils de portage en complément des piquets 1, ceci pour limiter l'utilisation de ces piquets tout en augmentant la portance du raisin. Il est réalisé dans une matière synthétique et présente une forme plane. Il est fixé à l'extérieur du tuteur 20 par un téton 41 en forme de harpon qui s'emboîte et se verrouille dans un orifice 24 correspondant. A l'extrémité libre du support 40 est prévue une entaille oblique 42 apte à recevoir un fil de portage. La matière qui le constitue est de préférence une matière à très faible coefficient de frottement comme un Téflon® ou toute autre matière équivalente, pour préserver les fils de portage d'une usure prématurée.

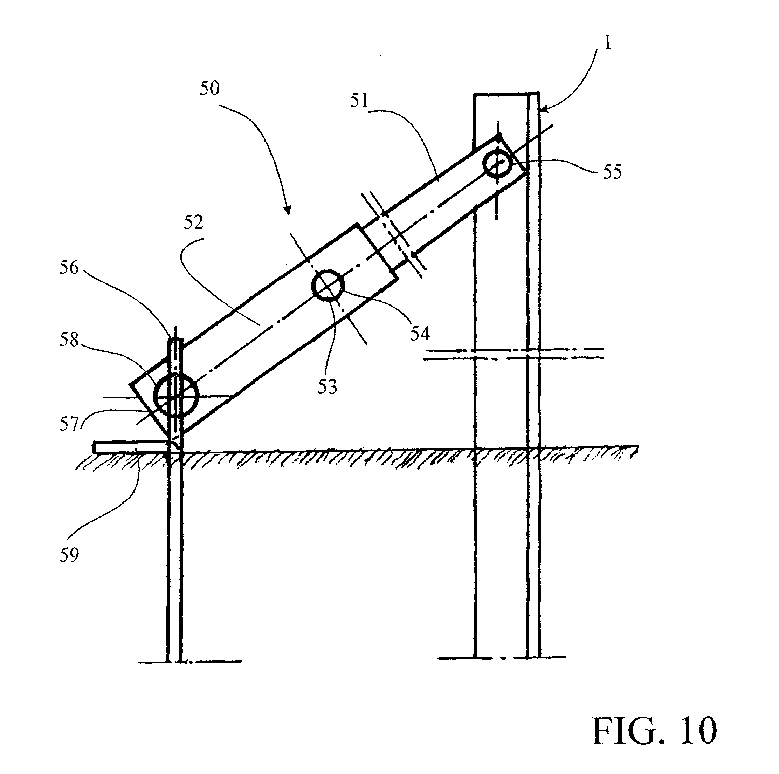

La palissade selon l'invention est complétée par une jambe de force 50 pour piquet de tête 1 telle qu'illustrée par la figure 10. Cette jambe de force 50 comporte deux tubes emboîtés, un tube mâle 51 et un tube femelle 52 assemblés à la longueur voulue par une goupille transversale 53 à travers un trou 54 prévu dans le tube femelle 52 et un trou percé au moment du montage dans le tube mâle 51. Le tube mâle 51 est solidaire d'un piquet de tête 1 par une goupille 55 logée dans un trou correspondant. Le tube femelle 52 est solidaire d'un piquet de retenue 56 par une goupille 57 logée dans un trou correspondant 58, ledit piquet de retenue étant enfoncé dans le sol. Ce piquet de retenue 56 comporte une forme en U saillante du sol pour recevoir entre ses branches le tube femelle 52 et la goupille 57. Il comporte également un talon 59 perpendiculaire à l'axe du piquet de retenue 56 et agencé pour prendre appui au sol pour le stabiliser.

Cette description démontre que l'invention permet d'atteindre tous les buts fixés. Notamment, les piquets, tuteurs, jambes de force ainsi que les accessoires tels que guide-fils et clips de fixation sont des pièces simples à réaliser et surtout rapides à mettre en place, simplifiant ainsi le travail du viticulteur.

La présente invention n'est pas limitée aux exemples de réalisation décrits mais s'étend à toute modification et variante évidentes pour un homme du métier tout en restant dans les revendications annexées. Notamment, cette invention ne se limite pas au domaine de la viticulture mais s'étend à tout le domaine agricole, arboricole, etc.

## Revendications

1. Palissade pour clôture ou plantation comportant au moins des piquets (1, 1') destinés à être enfoncés dans le sol sur une hauteur d'enfoncement définie et agencés pour supporter un grillage ou des fils de palissage sur la hauteur restante, **caractérisée en ce que** les piquets (1,1') comportent chacun, dans la hauteur d'enfoncement, une ouverture (7, 7) longitudinale agencée pour recevoir une traverse (5, 5'), cette traverse comportant une fente (9, 9) agencée pour s'emboîter sur ledit piquet (1) au moment de son enfoncement dans le sol, ladite traverse étant orientée perpendiculairement à ce piquet pour former avec lui une section en croix.

2. Palissade selon la revendication 1, comportant également des tuteurs (20) destinés à être enfoncés dans le sol sur une hauteur d'enfoncement définie et agencés pour maintenir des jeunes plants sur la hauteur restante, **caractérisée en ce que** les tuteurs (20) comportent chacun, dans la hauteur d'enfoncement, une ouverture (22) longitudinale agencée pour recevoir ladite traverse (5, 5'), cette traverse étant orientée perpendiculairement à ce tuteur pour former avec lui une section en croix.

3. Palissade selon la revendication 1 ou 2, **caractérisée en ce que** le piquet (1, 1') ou le tuteur (20) et la traverse comportent à leur extrémité, destinée à être enfoncée dans le sol, une forme en pointe (2, 21, 6).

4. Palissade selon la revendication 1 ou 2, **caractérisée en ce que** le piquet (1, 1') ou le tuteur (20) comporte une autre ouverture (13, 23) agencée pour recevoir un outil facilitant son enfoncement et/ou son extraction.

5. Palissade selon la revendication 1 ou 2, **caractérisée en ce que** le piquet (1') ou le tuteur comporte une ouverture longitudinale complémentaire (13') agencée pour recevoir un raidisseur (15), ce raidisseur (15) comportant à ses extrémités deux fentes (16, 17) orientées perpendiculairement et agencées pour s'emboîter respectivement sur la traverse (5') et sur le piquet (1') ou le tuteur.

6. Palissade selon la revendication 1, **caractérisée en ce que** le piquet (1,1') comporte au moins une encoche (4) pourvue d'un guide-fil (10) agencé pour guider sans frottement un fil de palissage.

7. Palissade selon la revendication 6, **caractérisée en ce que** le guide-fil (10) est réalisé en matière synthétique et présente une forme en U emboîtable dans ladite encoche par déformation.

8. Palissade selon la revendication 2, **caractérisée en ce que** le tuteur (20) comporte au moins un orifice (24) pourvu d'un clip de fixation (30) d'un jeune plant.

9. Palissade selon la revendication 8, **caractérisée en ce que** le clip de fixation (30) comporte au moins un téton (31) en forme de harpon fixé dans ledit orifice (24), une forme en creux (32) pour recevoir la tige du jeune plant et un collier amovible (34) pour maintenir la tige contre ledit clip.

10. Palissade selon la revendication 9, **caractérisée en ce que** le clip de fixation (30) comporte des pattes latérales (37) pour la fixation d'un filet de protection du jeune plant.

11. Palissade selon la revendication 2, **caractérisée en ce que** le tuteur (20) comporte au moins un orifice (24) pourvu d'un support guide-fil (40).

12. Palissade selon la revendication 11, **caractérisée en ce que** le support guide-fil (40) comporte au moins un téton (41) en forme de harpon fixé dans ledit orifice (24) et un oeillet (42) pour recevoir un fil de portage.

13. Palissade selon la revendication 1, comportant également des jambes de force (50) destinées à fixer les piquets (1,1') de tête au sol, **caractérisée** en que les jambes de force (50) comportent un tube mâle (51) emboîté dans un tube femelle (52) par coulissement et assemblés à la longueur souhaitée par une goupille transversale (53) logée dans des trous correspondants, un des tubes (51) étant solidaire du piquet (1, 1') de tête et l'autre tube (52) étant solidaire d'un piquet de retenue (56) prévu dans le sol à distance du piquet de tête.

## Patentansprüche

1. Zaun für eine Umzäunung oder Plantage, der mindestens zum Einrammen in den Boden auf eine festgelegte Einrammhöhe vorgesehene Pfähle (1,1') aufweist, die in der Lage sind, auf der verbleibenden Höhe ein Gitter oder Spalierdrähte zu tragen, **dadurch gekennzeichnet, dass** die Pfähle (1,1') jeweils in der Einrammhöhe eine Längsöffhung (7,7') aufweisen, die zur Aufnahme eines Querträgers (5,5') in der Lage ist, wobei der Querträger einen Schlitz (9,9') aufweist, der so angeordnet ist, dass er in dem Moment des Einrammens des Pfahls (1) in den Boden mit demselben in Eingriff geht, wobei der Querträger senkrecht zu dem Pfahl angeordnet ist, um mit ihm einen kreuzförmigen Abschnitt zu bilden.

2. Zaun nach Anspruch 1, welcher außerdem zum Einrammen in den Boden auf eine festgelegte Einrammhöhe bestimmte Stützen (20) aufweist, die in der Lage sind, junge Pflanzen auf der verbleibenden Höhe zu halten, **dadurch gekennzeichnet, dass** die Stützen (20) jeweils in der Einrammhöhe eine Längsöffnung (22) aufweisen, die so angeordnet ist, dass sie den Querträger (5,5') aufnimmt, wobei der Querträger senkrecht zu der Stütze angeordnet ist, um mit ihr einen kreuzförmigen Abschnitt zu bilden.

3. Zaun nach Anspruch 1 oder 2, **dadurch gekennzeichnet, dass** die Pfähle (1,1') oder die Stütze (20) und der Querträger an ihrem äußersten Ende eine zum Einrammen in den Boden vorgesehene Spitze (2,21,6) aufweisen.

4. Zaun nach Anspruch 1 oder 2, **dadurch gekennzeichnet, dass** der Pfahl (1,1') oder die Stütze (20) eine weitere Öffnung (13,23) aufweisen, die zur Aufnahme eines deren Einrammen und/oder Herausziehen erleichternden Werkzeuges in der Lage ist.

5. Zaun nach Anspruch 1 oder 2, **dadurch gekennzeichnet, dass** der Pfahl (1') oder die Stütze eine ergänzende Längsöffnung (13') aufweisen, die zur Aufnahme einer Aussteifung (15) in der Lage ist, wobei die Aussteifung (15) an ihren äußersten Enden zwei senkrecht ausgerichtete Schlitze (16,17) aufweist, die so angeordnet sind, das sie jeweils mit dem Querträger (5') und mit dem Pfahl (1') oder der Stütze in Eingriff gehen.

6. Zaun nach Anspruch 1, **dadurch gekennzeichnet, dass** der Pfahl (1,1') mindestens einen mit einer Drahtführung (10) versehenen Einschnitt (4) aufweist, die zur reibungslosen Führung eines Spalierdrahtes in der Lage ist.

7. Zaun nach Anspruch 6, **dadurch gekennzeichnet, dass** die Drahtführung (10) aus synthetischem Material hergestellt ist und eine durch Verformung in dem Einschnitt in Eingriff bringbare U-Form aufweist.

8. Zaun nach Anspruch 2, **dadurch gekennzeichnet, dass** die Stütze (20) mindestens eine mit einer Befestigungsklammer (30) für eine junge Pflanze versehene Öffnung (24) aufweist.

9. Zaun nach Anspruch 8, **dadurch gekennzeichnet, dass** die Befestigungsklammer (30) mindestens einen in der Öffnung (24) befestigten greiferförmigen Zapfen (31), eine Vertiefung (32) zur Aufnahme des Stängels der jungen Pflanze und eine abnehmbare Lasche (34) aufweist, um den Stängel an der Klammer zu halten.

10. Zaun nach Anspruch 9, **dadurch gekennzeichnet, dass** die Befestigungsklammer (30) seitliche Laschen (37) zur Befestigung eines Schutznetzes für die junge Pflanze aufweist.

11. Zaun nach Anspruch 2, **dadurch gekennzeichnet, dass** die Stütze (20) mindestens eine mit einem Drahtführungsträger (40) versehene Öffnung (24) aufweist.

12. Zaun nach Anspruch 11, **dadurch gekennzeichnet, dass** der Drahtführungsträger (40) mindestens einen in der Öffnung (24) befestigten greiferförmigen Zapfen (41), und eine Öse (42) zur Aufnahme eines Trägerdrahtes aufweist.

13. Zaun nach Anspruch 1, welcher außerdem Streben (50) zur Fixierung der Vorderpfähle (1,1') im Boden aufweist, **dadurch gekennzeichnet, dass** die Streben (50) ein in einem Rohr (52) mit größerem Durchmesser gleitend in Eingriff stehendes Rohr (51) mit kleinerem Durchmesser umfassen, die mittels eines in den entsprechenden Löchern untergebrachten Querstifles (53) in der gewünschten Länge befestigt sind, wobei eines der Rohre (51) mit dem Vorderpfahl (1,1') fest verbunden und das andere Rohr (52) mit einem von dem Vorderpfahl entfernt im Boden angeordneten Rückhaltepfahl (56) fest verbunden ist.

## Claims

1. A fence for an enclosure or planation comprising at least posts (1, 1') intended to be driven into the ground at a defined driving-in height and designed to support netting or training wires at the remaining height, **characterised in that** the posts (1, 1') each comprise, at the driving-in height, a longitudinal opening (7, 7') designed to receive a crosspiece (5, 5'), this crosspiece comprising a slot (9, 9') designed to fit onto the said post (1) at the moment it is driven into the ground, the said crosspiece being orientated perpendicularly to this post to form a cross-shaped section therewith.

2. A fence according to Claim 1, also comprising stakes (20) intended to be driven into the ground at a defined driving-in height and designed to support young plants at the remaining height, **characterised in that** the stakes (20) each comprise, at the driving-in height, a longitudinal opening (22) designed to receive the said crosspiece (5, 5'), this crosspiece being orientated perpendicularly to this stake to form a cross-shaped section therewith.

3. A fence according to Claim 1 or 2, **characterised in that** the post (1, 1') or the stake (20) and the crosspiece have a pointed shape (2, 21, 6) at their end, which is intended to be driven into the ground.

4. A fence according to Claim 1 or 2, **characterised in that** the post (1, 1') or the stake (20) comprises another opening (13, 23) designed to receive a tool which facilitates its driving in and/or its extraction.

5. A fence according to Claim 1 or 2, **characterised in that** the post (1') or the stake comprises a complementary longitudinal opening (13') designed to receive a stiffener (15), this stiffener (15) comprising at its ends two slots (16, 17) orientated perpendicularly and designed to fit respectively onto the crosspiece (5') and onto the post (1') or the stake.

6. A fence according to Claim 1, **characterised in that** the post (1, 1') comprises at least one notch (4) provided with a wire guide (10) designed to guide a training wire without friction.

7. A fence according to Claim 6, **characterised in that** the wire guide (10) is made from synthetic material and has a U shape which can be fitted in the said notch by deformation.

8. A fence according to Claim 2, **characterised in that** the stake (20) comprises at leat one orifice (24) provided with a fastening clip (30) for a young plant.

9. A fence according to Claim 8, **characterised in that** the fastening clip (30) comprises at least one harpoon-shaped point (31) fixed into the said orifice (24), a hollow shape (32) to receive the stem of the young plant and a detachable collar (34) to keep the stem against the said clip.

10. A fence according to Claim 9, **characterised in that** the fastening clip (30) comprises lateral lugs (37) for the attachment of a net for protecting the young plant.

11. A fence according to Claim 2, **characterised in that** the stake (20) comprises at least one orifice (24) provided with a wire guide support (40).

12. A fence according to Claim 11, **characterised in that** the wire guide support (40) comprises at least one harpoon-shaped point (41) fixed into the said orifice (24) and an eyelet (42) to receive a load-bearing wire.

13. A fence according to Claim 1, also comprising struts (50) intended to fix the front posts (1,1') in the ground, **characterised in that** the struts (50) comprise a male tube (51) fitted into a female tube (52) by sliding and fitted together at the desired length by a transversal pin (53) housed in corresponding holes, one of the tubes (51) being joined to the front post (1, 1') and the other tube (52) being joined to an anchor post (56) provided in the ground at a distance from the front post.
